# EUROPEAN PATENT APPLICATION

(11) **EP 2 469 927 A1**
(43) Date of publication of application: **27.06.2012**
(21) Application number: 10809943.3
(22) Date of filing: 16.08.2010
(51) Int. Cl.: H04W 36/10, H04W 36/30, H04W 92/12

(54) **MOBILE COMMUNICATION METHOD AND RADIO BASE STATION**

(30) Priority: 18.08.2009 JP 2009189599
(71) Applicant: NTT DOCOMO, Inc., Chiyoda-ku Tokyo 100-6150 (JP)
(72) Inventor: TAKAHASHI, Hideaki, Tokyo 100-6150 (JP); HAPSARI, Wuri Andarmawanti, Tokyo 100-6150 (JP); OKAMOTO, Takeshi, Tokyo 100-6150 (JP); HOSONO, Hiroyuki, Tokyo 100-6150 (JP); ISHII, Minami, Tokyo 100-6150 (JP)
(74) Representative: HOFFMANN EITLE
(86) International application number: PCT/JP2010/063816
(87) International publication number: WO 2011/021602

(57) **Abstract**

A mobile communication method according to the present invention is summarized in that it includes: a step in which a mobile station UE sends "Measurement Report" including location registration area information "TAI" and identification information "ECGI" on a cell subordinate to a radio base station HeNB, to a radio base station eNB.; a step in which the radio base station eNB. sends "(X2) HO Request" including the identification information ""ECGI" on the cell subordinate to the radio base station HeNB to an IP address of a gateway apparatus HeNB-GW corresponding to the location registration area information "TAI"; and a step in which the gateway apparatus HeNB-GW transfers the "(X2) HO Request" to the IP address corresponding to the identification information "ECGI" on the cell subordinate to the radio base station HeNB.

## Description

### TECHNICAL FIELD

The present invention relates to a mobile communication method, and to a radio base station.

### BACKGROUND ART

In order for a network to be able to accommodate many different radio base stations HeNB (Home eNB), a mobile communication system of the E-UTRAN scheme is configured such that a gateway device HeNB-GW (HeNB Gateway) can be provided between a mobile switching center MME and a radio base station HeNB.

S1 interfaces (specifically, an S1 C-plane (S1-C) and an S1 U-plane (S1-U)) are defined between the mobile switching center MME and the gateway device HeNB-GW, and also between the gateway device ReNB-GW and the radio base stations HeNB.

The configuration herein is such that S1 C-plane signaling (S1-AP messages) that is individual to a mobile station UE is not terminated by, but rather relayed by the gateway device HeNB-GW.

The configuration is also such that S1 C-plan signaling that is not individual to the mobile station UE is terminated by the gateway device HeNB-GW.

The S1 U-plane data may be configured so as to be relayed by the gateway device HeNB-GW, or may be configured so as to be terminated by the gateway device HeNB-GW.

### SUMMARY OF THE INVENTION

### PROBLEMS TO BE SOLVED BY THE INVENTION

However, the conventional mobile communication system of the E-UTRAN scheme, being configured such that S1 C-plane signaling that is individual to the mobile station UE is not terminated by but rather relayed by the gateway device HeNB-GW, has been problematic in that because handover messages are S1 C-plane signaling that is individual to the mobile station UE, each time the mobile station UE executes a handover to a cell that is subordinate to a radio base station HeNB accommodated in the gateway device HeNB-GW, the mobile switching center MME needs to execute a predetermined process, leading to an increased process load on the mobile switching center MME.

In light of this, the present invention has been made in view of the problem described above, and an object thereof is to provide a mobile communication method and a radio base station capable of reducing the process load on the mobile switching center MME when the mobile station UE executes a handover to a cell that is subordinate to a radio base station HeNB that is accommodated in the gateway device HeNB-GW.

### MEANS FOR SOLVING THE PROBLEM

A first characteristic of the present invention is summarized as a mobile communication method in which a mobile station executes a handover from a cell subordinate to a first radio base station to a cell subordinate to a second radio base station accommodated in a gateway device, comprising, a step in which the mobile station sends a measurement report including location registration area information and identification information on the cell subordinate to the second radio base station to the first radio base station, a step in which the first radio base station sends a handover message including the identification information on the cell subordinate to the second radio base station to an IP address of the gateway device corresponding to the location registration area information; and a step in which the gateway device transfers the handover message to the IP address corresponding to the identification information on the cell subordinate to the second radio base station.

A second characteristic of the present invention is summarized as a mobile communication method in which a mobile station executes a handover from a cell subordinate to a first radio base station to a cell subordinate to a second radio base station accommodated in a gateway device, comprising, a step in which the mobile station sends a measurement report including identification information on the cell subordinate to the second radio base station to the first radio base station, a step in which the first radio base station sends a handover message including the identification information on the cell subordinate to the second radio base station to an IP address of the gateway device corresponding to subnet information of the identification information on the cell subordinate to the second radio base station, and a step in which the gateway device transfers the handover message to the IP address corresponding to the identification information on the cell subordinate to the second radio base station.

A third characteristic of the present invention is summarized as a radio base station in a mobile communication system in which a mobile station is capable of executing a handover from a cell subordinate to a first radio base station to a cell subordinate to a second radio base station accommodated in a gateway device, the radio base station being able to behave as the first radio base station, comprising, a management unit configured so as to coordinate and manage location registration area information and the IP address of the gateway device, and a transmission unit configured so as to send a handover message including identification information on the cell subordinate to the second radio base station to the IP address of the gateway device corresponding to the location registration area information in a case in which a measurement report including the location registration area information and the identification information on the cell subordinate to the second radio base station has been received from the mobile station.

A fourth characteristic of the present invention is summarized as a radio base station in a mobile communication system in which a mobile station is capable of executing a handover from a cell subordinate to a first radio base station to a cell subordinate to a second radio base station accommodated in a gateway device, the radio base station being able to behave as the first radio base station, comprising, a management unit configured so as to coordinate and manage subnet information and the IP address of the gateway device, and a transmission unit configured so as to send a handover message including identification information on the cell subordinate to the second radio base station to the IP address of the gateway device corresponding to the subnet information of the identification information on the cell subordinate to the second radio base station in a case in which a measurement report including the identification information on the cell subordinate to the second radio base station has been received from the mobile station.

### EFFECT OF THE INVENTION

As described above, according to the present invention, it is possible to provide a mobile communication method and a radio base station capable of reducing the process load on the mobile switching center MME when the mobile station UE executes a handover to a cell that is subordinate to a radio base station HeNB that is accommodated in the gateway device HeNB-GW.

### BRIEF DESCRIPTION OF THE DRAWINGS

[Fig. 1] Fig. 1 is an overall configuration diagram of a mobile communication system according to a first embodiment of the present invention.
[Fig. 2] Fig. 2 is a protocol stack diagram of the mobile communication system according to the first embodiment of the present invention.
[Fig. 3] Fig. 3 is a functional block diagram of the radio base station according to the first embodiment of the present invention.
[Fig. 4] Fig. 4 is a diagram illustrating an example of NRT managed by the radio base station according to the first embodiment of the present invention.
[Fig. 5] Fig. 5 is a functional block diagram of the gateway device according to the first embodiment of the present invention.
[Fig. 6] Fig. 6 is a diagram illustrating an example of NRT managed by the gateway device according to the first embodiment of the present invention.
[Fig. 7] Fig. 7 is a sequence diagram illustrating the operations of the mobile communication system according to the first embodiment of the present invention.
[Fig. 8] Fig. 8 is a diagram illustrating an example of NRT managed by a radio base station according to a first modification of the present invention.
[Fig. 9] Fig. 9 is a sequence diagram illustrating the operations of the mobile communication system according to the first modification of the present invention.

### BEST MODES FOR CARRYING OUT THE INVENTION

### (Configuration of mobile communication system according to first embodiment of the present invention)

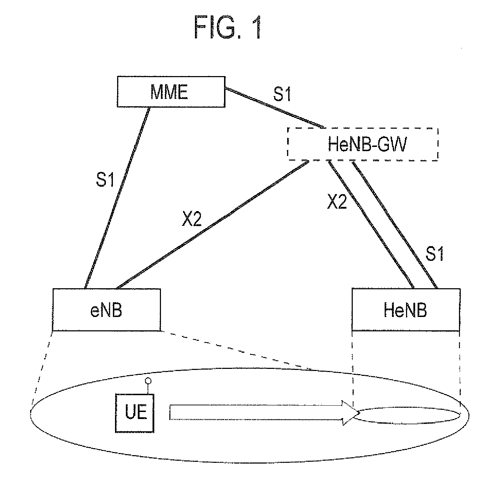

A description will now be provided for the configuration of a mobile communication system according to a first embodiment of the present invention, with reference to Fig. 1 to Fig. 6.

The mobile communication system according to this embodiment is a mobile communication system of the E-OUTRAN scheme and is provided with a mobile switching center MME, a gateway device HeNB-GW, a radio base station eNB, and a radio base station HeNB, as illustrated in Fig. 1.

In the mobile communication system according to this embodiment, S1 interfaces are defined between the mobile switching center MME and the radio base station eNB, between the mobile switching center MME and the gateway device HeNB-GW, and between the gateway device HeNB-GW and the radio base station HeNB.

In the mobile communication system according to this embodiment, X2 interfaces are also defined between the gateway device HeNB-GW and the radio base station eNB, and between the gateway device HeNB-GW and the radio base station HeNB.

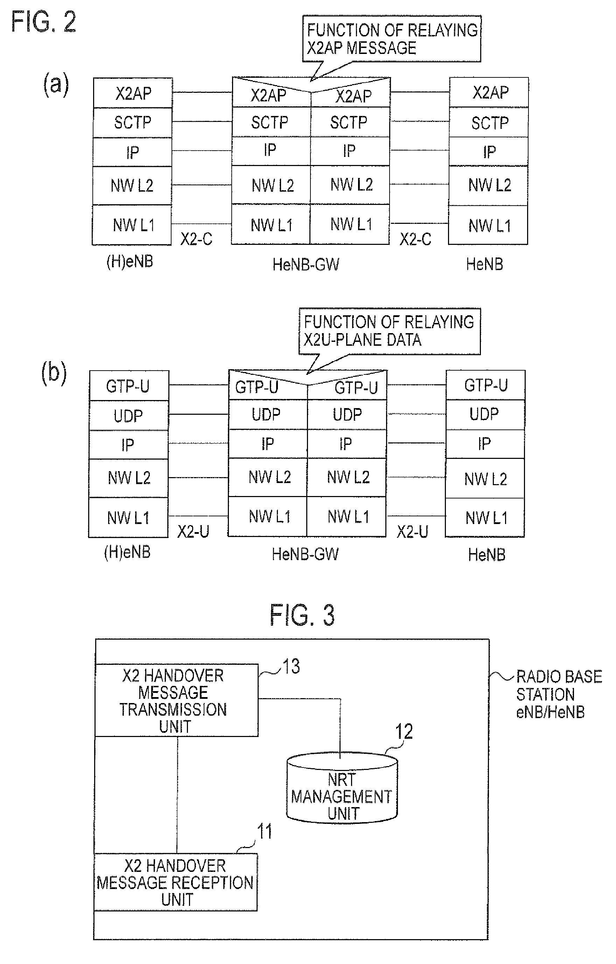

Specifically, as illustrated in Fig. 2A, an X2 C-plane (X2-C) is defined, and, as illustrated in Fig. 2B, an X2 U-plane (X2-U) is defined, between the gateway device HeNB-GW and the radio base station eNB, and between the gateway device HeNB-GW and the radio base station HeNB.

Fig. 2A and Fig. 2B provide illustrations of the protocol stacks defined between the gateway device HeNB-GW and the radio base station eNB., and between the gateway device HeNB-GW and the radio base station HeNB.

As illustrated in Fig. 3, the radio base station eNB. is provided with an X2 handover message reception unit 11, an NRT (Neighbor Relation Table) management unit 12, and an X2 handover message transmission unit 13. The configuration of the mobile base station HeNB is also fundamentally the same as the configuration of the mobile base station eNB and is therefore representative in this specification and is described as having the configuration of the radio base station eNB.

The X2 handover message reception unit 11 is configured so as to receive an X2 handover message, e.g., "Measurement Report" from the mobile station UE.

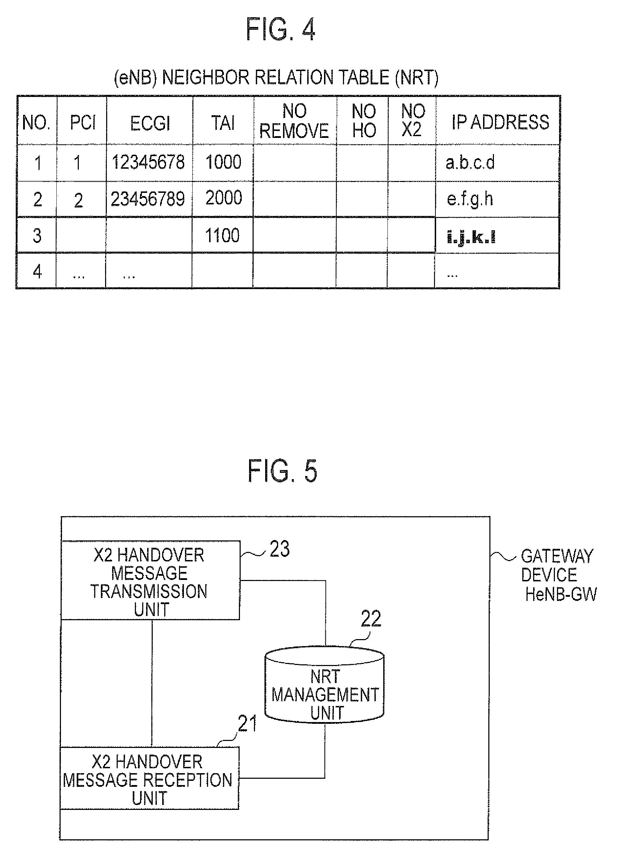

The NRT management unit 12 is configured so as to manage the NRT. For example, as illustrated in Fig. 4, the same is configured so as to manage the NRT for coordinating the "PCI (Physical Cell ID)", the "ECGI (E-UTRAN Cell Global ID)", the "TAI (Tracking Area ID)", the "IP address", and the like for adjacent cells.

Herein, in some cases it is difficult for the NRT management unit 12 to manage in the NRT all the information for the cells subordinate to the adjacent radio base stations HeNB and difficult for the radio base station eNB. to establish an X2 interface with all the adjacent radio base stations HeNB, due to apparatus ability of the radio base station eNB. (for example, the maximum number of sessions of the SCTP) and other constraints.

Further, in some cases the radio base station HeNB starts up and stops very frequently, and it is inefficient for the NRT management unit 12 to update the NRT each time this happens.

Accordingly, the NRT management unit 12, instead of managing all the cells subordinate to the radio base stations HeNB, is configured so as to assign location registration area information "TAI" as a shared ID for the radio base stations HENB. accommodated in the same gateway device HeNB-GW, and, as illustrated by "No. 3" in Fig. 4, to coordinate such location registration area information "TAI" with the IP address of the gateway device HeNB-GW in the NRT.

When the measurement report "Measurement Report" including the location registration area information "TAI" and the identification information "ECGI" on the cell subordinate to the radio base station HeNB has been received from the mobile station UE, the X2 handover message transmission unit 13 is configured so as to refer to the NRT managed by the NRT management unit 12 and to transmit a handover message "(X2) HO Request" including the identification information "ECGI" on the cell subordinate to the radio base station HeNB to the IP address of the gateway device HeNB-GW corresponding to the relevant location registration area information "TAI".

As illustrated in Fig. 4, the gateway device HeNB-GW is provided with an X2 handover message reception unit 21, an NRT management unit 22, and an X2 handover message transmission unit 23.

The X2 handover message reception unit 21 is configured so as to receive X2 handover messages, e.g., "(X2) HO Request" from the radio base station eNB/HeNB from which the handover is to originate.

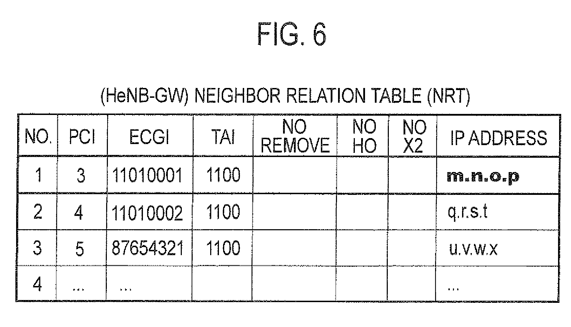

The NRT management unit 22 is configured so as to manage the NRT. For example, as illustrated in Fig. 6, the same is configured so as to manage the NRT for coordinating the "PCI", the "ECGI", the "TAI", the "IP address", and the like for the adjacent cells.

Herein, the ART management unit 22 is configured so as to also manage, in the NRT, the information for the cell subordinate to the radio base station HeNB accommodated in the gateway device HeNB-GW.

When a handover message "(X2) HO Request" including the identification information "ECGI" on the cell subordinate to the radio base station HeNB is received from the radio base station eNB, the X2 handover message transmission unit 23 is configured so as to refer to the NRT managed by the NRT management unit 22 and to transfer the relevant handover message "(X2) HO Request" to the IP address corresponding to the identification information "ECGI" on the cell subordinate to the relevant radio base station HeNB.

### (Operation of the mobile communication system according to the first embodiment of the present invention)

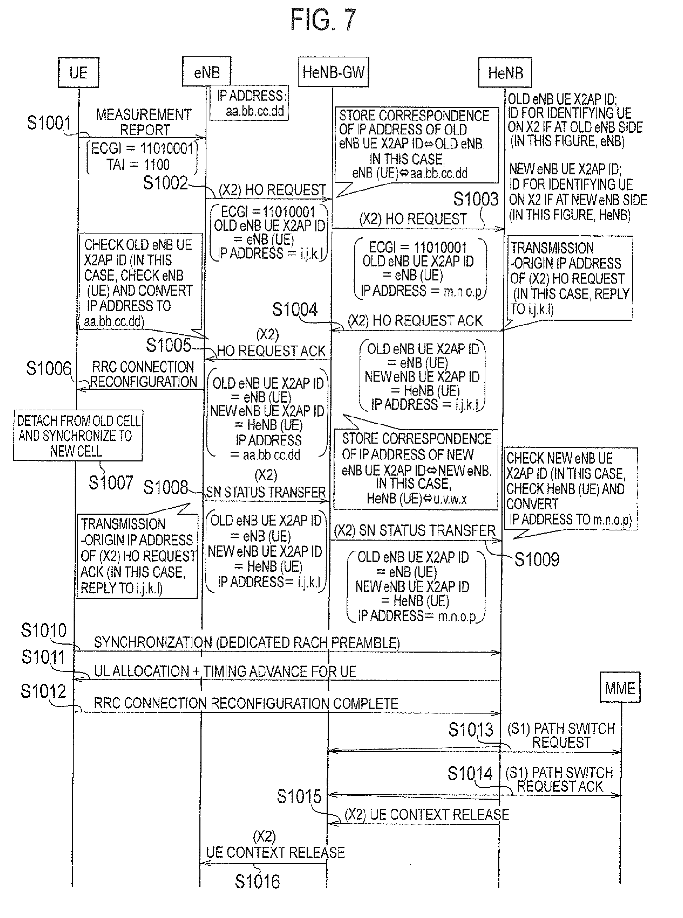

A description will now be provided with reference to Fig. 7 for the operation in the mobile communication system according to the first embodiment of the present invention in which the mobile station UE executes a handover from the cell subordinate to the radio base station eNB to the cell subordinate to the radio base station HeNB accommodated in the gateway device HeNB-GW.

As illustrated in Fig. 7, in step S1001, the mobile station UE sends "Measurement Report" including "ECGI = 11010001" and "TAI = 1100" to the radio base stations.

Herein, "ECGI = 1101000" is the ""ECGI" of the radio base station HeNB., and "TAI = 1100" is the "TAI" assigned to the radio base station HeNB accommodated in the gateway device HeNB-GW.

In step S1002, the radio base station eNB decides that the mobile station UE is executing an X2 handover from the cell subordinate to the radio base station eNB to the cell subordinate to the radio base station HeNB, referring to the NRT illustrated in Fig. 4, extracts the IP address "i.j.k.l" of the gateway device HeNB-GW corresponding to "TAI = 100", and sends "(X2) HO Request" including "ECGI = 11010001" and "Old eNB UE X2AP ID = eNB (UE)" to the relevant IP address "i.j.k.l".

Herein, "Old eNB UE X2AP ID = eNB (UE)" is the radio base station from which the handover is to originate (which in this embodiment is the radio base station eNB.), and is an ID for identifying the mobile station UE on the X2 interface.

In step S1003, the gateway device HeNB-GW refers to the NRT illustrated in Fig. 6, extracts the IP address "m.n.o.p" of the radio base station HeNB corresponding to "ECGI = 11010001", and transfers the "(X2) HO Request" including the "ECGI = 11010001" and the "Old eNB UE X2AP ID = eNB (UE)" to the relevant IP address "m.n.o.p".

Herein, the gateway device HeNB-GW coordinates and stores the "Old eNB UE X2AP ID = eNB (UE)" and the IP address "aa.bb.cc.dd" of the radio base station eNB.

In step S1004, the radio base station HeNB sends "(X2) HO Request ACK" including the "Old eNB UE X2AP ID = eNB (UE)" and "New eNB UE X2AP ID = HeNB (UE)" to the transmission-origin IP address "i.j.k.l" of the "(X2) HO Request" received in step S1008.

In step S1005, the gateway device HeNB-GW sends "(X2) HO Request ACK" including the "Old eNB UE X2AP ID = eNB (UE)" and the "New eNB UE X2AP ID = HeNB (UE) to the IP address "aa.bb.cc.dd" of the radio base station eNB. corresponding to the "Old eNB UE X2AP ID = eNB (UE)" included in the "(X2) HO Request ACK" received in step S1004.

Herein, the gateway device HeNB-GW coordinates and stores the "New eNB UE X2AP ID = HeNB (UE)" and the IP address "m.n.o.p" of the radio base station HeNB.

In step S1006, the radio base station eNB sends "RRC Connection Reconfiguration" to the mobile station UE.

In step S1007, the mobile station UE detaches from the cell from which the handover is to originate (the cell subordinate to the radio base station eNB) and synchronizes with the cell to which the handover is directed (the cell subordinate to the radio base station HeNB).

In step S1008, the radio base station eNB sends "(X2) SN Status Transfer" including the "Old eNB UE X2AP ID = eNB (UE)" and the "New eNB. UE X2AP ID = HeNB (UE)" to the transmission-origin IP address "i.j.k.l" of the "(X2) HO Request ACK" received in step S1005.

In step S1009, the gateway device HeNB-GW sends the "(X2) SN Status Transfer" including the "Old eNB UE X2AP ID = eNB (UE)" and the "New eNB. UE X2AP ID = HeNB (UE)" to the IP address "m.n.o.p" corresponding to the "New eNB UE X2AP ID = HeNB (UE)" included in the "(X2) SN Status Transfer" received in step S1008.

In step S1010, the mobile station UE sends, to the radio base station HeNB, "Random Access CHannel Preamble (RACH Preamble)" that has been allocated specifically to the mobile station UE; in step S1011, the radio base station HeNB sends "UL allocation + Timing Advance for UE" to the mobile station UE; in step S1012, "RRC Connection Reconfiguration Complete" is sent to the radio base station HeNB.

In step S1013, the radio base station HeNB sends "(S1) Path Switch Request" to the mobile switching center MME via the gateway device HeNB-GW, and the mobile switching center MME sends "(S1) Path Switch Request ACK" to the radio base station HeNB via the gateway device HeNB-GW.

In step S1015, the radio base station HeNB sends "(X2) UE Context Release" to the gateway device HeNB-GW, and in step S1016, the gateway device HeNB-GW sends the "(X2) UE Context Release" to the radio base station eNB.

### (Operation and Effect of the mobile communication system according to the first embodiment of the present invention)

According to the mobile communication system according to the first embodiment of the present invention, it is possible to reduce the process load on the mobile switching center MME, because the X2 interfaces are used to execute the process for the handover between the mobile station UE and the radio base station HeNB.

### (First Modification)

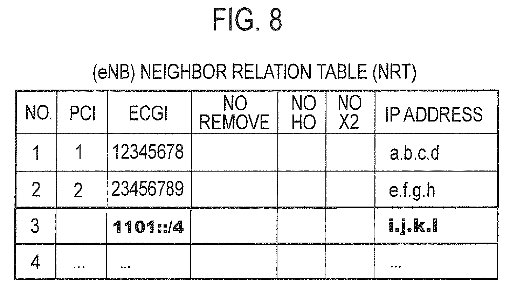

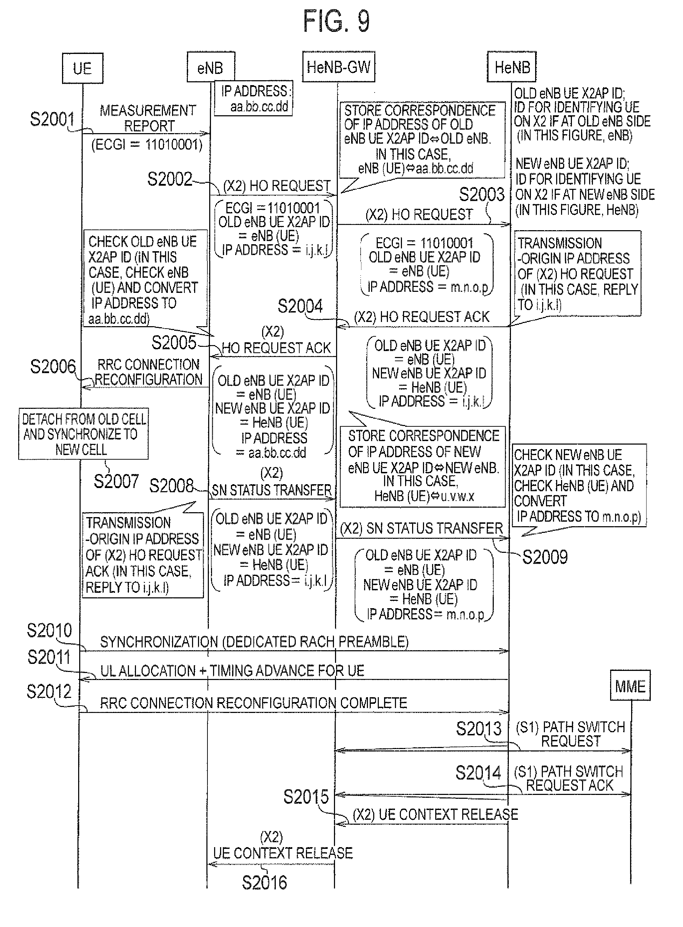

A description will now be provided with reference to Fig. 8 and Fig. 9 for a mobile communication system according to a first modification of the present invention. The following is a description of the mobile communication system according to the first modification, focusing on the points of difference from the mobile communication system according to the first embodiment described above.

The mobile communication system according to the first modification, as illustrated in Fig. 8, is configured such that the NRT management unit 12 of the radio base station eNB, instead of managing all of the cells subordinate to the radio base stations HeNB, assigns subnet information (for example, 1101::/4, where "1101" indicates a shared subnet identifier for the radio base stations HeNB accommodated in the same gateway device HeNB, and "/4" indicates the length of the subnet identifier (which, in the case of this example, is four bits)) as a shared ID for the radio base stations HeNB accommodated in the same gateway device HeNB-GW, and, in the NRT, coordinates the relevant subnet information with the IP address of the gateway device HeNB-GW, as illustrated by "No. 3" in Fig. 8.

When the measurement report "Measurement Report" including the identification information "ECGI" on the cell subordinate to the radio base station HeNB has been received from the mobile station UE, the X2 handover message transmission unit 13 of the radio base station eNB. is configured so as to refer to the NRT managed by the NRT management unit 12 and to transmit a handover message "(X2) HO Request" including the identification information ""ECGI" on the cell subordinate to the radio base station HeNB to the IP address of the gateway device HeNB-GW corresponding to the subnet information of the identification information "ECGI" on the cell subordinate to the relevant radio base station HeNB.

A description will now be provided with reference to Fig. 9 for the operation in the mobile communication system according to the first embodiment of the present invention in which the mobile station UE executes a handover from the cell subordinate to the radio base station eNB. to the cell subordinate to the radio base station HeNB accommodated in the gateway device HeNB-GW.

As illustrated in Fig. 9, in step S2001, the mobile station UE sends "Measurement Report" including "ECGI = 11010001" to the radio base station eNB.

Herein, "ECGI = 11010001" is the "ECGI" of the radio base station HeNB.

In step S2002, the radio base station eNB decides that the mobile station UE is executing an X2 handover from the cell subordinate to the radio base station eNB to the cell subordinate to the radio base station HeNB, and, referring to the NRT illustrated in Fig. 8, extracts the IP address "i.j.k.l" of the gateway device HeNB-GW corresponding to the subnet information "1101" of the "ECGI = 11010001", and sends "(X2) HO Request" including "ECGI = 11010001" and "Old eNB. UE X2AP ID = eNB (UE)" to the relevant IP address "i.j.k.1".

In step S2003, the gateway device HeNB-GW refers to the NRT illustrated in Fig. 6, extracts the IP address "m.n.o.p" of the radio base station HeNB corresponding to "ECGI = 11010001", and transfers the "(X2) HO Request" including the "ECGI = 11010001" and the "Old eNB UE X2AP ID = eNB (UE)" to the relevant IP address "m.n.o.p".

Herein, the gateway device HeNB-GW coordinates and stores the "Old eNB UE X2AP ID = eNB (UE)" and the IP address "aa.bb.cc.dd" of the radio base station eNB.

Hereinafter, the operations of steps S2004 to S2106 are the same as the operations of steps S1004 to S1016 illustrated in Fig. 7.

The characteristics of the embodiment described above may be expressed as follows.

A first characteristic of this embodiment can be summarized in that a mobile communication method in which the mobile station UE executes a handover from the cell subordinate to the radio base station eNB (the first radio base station) to the cell subordinate to the radio base station HeNB accommodated in the gateway device HeNB-GW (the second radio base station) has a step in which the mobile station UE sends the measurement report "Measurement Report" including location registration area information "TAI" and identification information "ECGI" on the cell subordinate to the radio base station HeNB to the radio base station eNB,; a step in which the radio base station eNB sends a handover message "(X2) HO Request" including the identification information "ECGI" on the cell subordinate to the radio base station HeNB to the IP address of the gateway device HeNB-GW corresponding to the location registration area information "TAF; and a step in which the gateway device HeNB-GW transfers the handover message "(X2) HO Request" to the IP address corresponding to the identification information "ECGI" on the cell subordinate to the radio base station HeNB.

A second characteristic of this embodiment can be summarized in that a mobile communication method in which the mobile station. UE executes a handover from the cell subordinate to the radio base station eNB to the cell subordinate to the radio base station HeNB accommodated in the gateway device HeNB-GW has a step in which the mobile station UE sends the measurement report "Measurement Report" including identification information "ECGI" on the cell subordinate to the radio base station HeNB to the radio base station eNB; a step in which the radio base station eNB sends a handover message "(X2) HO Request" including the identification information; "ECGI" on the cell subordinate to the radio base station HeNB to the IP address of the gateway device HeNB-GW corresponding to subnet information of the identification information "ECGI" on the cell subordinate to the radio base station HeNB; and a step in which the gateway device HeNB-GW transfers the handover message "(X2) HO Request" to the IP address corresponding to the identification information "ECGI" on the cell subordinate to the radio base station HeNB.

A third characteristic of this embodiment can be summarized in that the radio base station eNB in a mobile communication system in which the mobile station UE can execute a handover from the cell subordinate to the radio base station eNB to the cell subordinate to the radio base station HeNB accommodated in the gateway device HeNB,GW is provided with an NRT management unit 12 configured to coordinate and manage the location registration area information "TAT" and the IP address of the gateway device HeNB-GW, and an X2 handover message transmission unit 13 configured so as to send a handover message "(X2) HO Request" including identification information "ECGI" on the cell subordinate to the radio base station HeNB to the IP address of the gateway device HeNB-GW corresponding to location registration area information "TAI" in a case in which the measurement report "Measurement Report" including the location registration area information "TAI" and the identification information "ECGI" on the cell subordinate to the radio base station HeNB has been received from the mobile station UE.

A fourth characteristic of this embodiment can be summarized in that the radio base station eNB in a mobile communication system in which the mobile station UE can execute a handover from the cell subordinate to the radio base station eNB to the cell subordinate to the radio base station HeNB accommodated in the gateway device HeNB-GW is provided with an NRT management unit 12 configured to coordinate and manage subnet information and the IP address of the gateway device HeNB-GW, and an X2 handover message transmission unit 13 configured so as to send a handover message "(X2) HO Request" including identification information "ECGI" on the cell subordinate to the radio base station HeNB to the IP address of the gateway device HeNB-GW corresponding to the subnet information of the identification information ""ECGI" on the cell subordinate to the radio base station HeNB in a case in which the measurement report "Measurement Report" including the location registration area information "TAI" and the identification information "ECGI" on the cell subordinate to the radio base station HeNB has been received from the mobile station UE.

It is noted that the operation of the above-described the radio base station eNB/HeNB, the mobile station UE, the gateway device HeNB-GW or the mobile switching center MME may be implemented by a hardware, may also be implemented by a software module executed by a processor, and may further be implemented by the combination of the both.

The software module may be arranged in a storage medium of an arbitrary format such as RAM(Randoan Access Memory), a flash memory, ROM (Read Only Memory), EPROM (Erasable Programmable ROM), EEPROM (Electronically Erasable and Programmable ROM), a register, a hard disk, a removable disk, and CD-ROM.

The storage medium is connected to the processor so that the processor can write and read information into and from the storage medium. Such a storage medium may also be accumulated in the processor. The storage medium and processor may be arranged in ASIC. Such the ASIC may be arranged in the radio base station eNB/HeNB, the mobile station UE, the gateway device HeNB-GW or the mobile switching center MME. Further, such a storage medium or a processor may be arranged, as a discrete component, in the radio base station eNB/HeNB, the mobile station UE, the gateway device HeNB-GW or the mobile switching center MME.

Thus, the present invention has been explained in detail by using the above-described embodiments; however, it is obvious that for persons skilled in the art, the present invention is not limited to the embodiments explained herein. The present invention can be implemented as a corrected and modified mode without departing from the gist and the scope of the present invention defined by the claims. Therefore, the description of the specification is intended for explaining the example only and does not impose any limited meaning to the present invention.

## Claims

1. A mobile communication method in which a mobile station executes a handover from a cell subordinate to a first radio base station to a cell subordinate to a second radio base station accommodated in a gateway device, comprising:
a step in which the mobile station sends a measurement report including location registration area information and identification information on the cell subordinate to the second radio base station to the first radio base station;
a step in which the first radio base station sends a handover message including the identification information on the cell subordinate to the second radio base station to an IP address of the gateway device corresponding to the location registration area information; and
a step in which the gateway device transfers the handover message to the IP address corresponding to the identification information on the cell subordinate to the second radio base station.

2. A mobile communication method in which a mobile station executes a handover from a cell subordinate to a first radio base station to a cell subordinate to a second radio base station accommodated in a gateway device, comprising:
a step in which the mobile station sends a measurement report including identification information on the cell subordinate to the second radio base station to the first radio base station;
a step in which the first radio base station sends a handover message including the identification information on the cell subordinate to the second radio base station to an IP address of the gateway device corresponding to subnet information of the identification information on the cell subordinate to the second radio base station; and
a step in which the gateway device transfers the handover message to the IP address corresponding to the identification information on the cell subordinate to the second radio base station.

3. A radio base station in a mobile communication system in which a mobile station is capable of executing a handover from a cell subordinate to a first radio base station to a cell subordinate to a second radio base station accommodated in a gateway device, the radio base station being able to behave as the first radio base station, comprising:
a management unit configured so as to coordinate and manage location registration area information and the IP address of the gateway device; and
a transmission unit configured so as to send a handover message including identification information on the cell subordinate to the second radio base station to the IP address of the gateway device corresponding to the location registration area information in a case in which a measurement report including the location registration area information and the identification information on the cell subordinate to the second radio base station has been received from the mobile station.

4. A radio base station in a mobile communication system in which a mobile station is capable of executing a handover from a cell subordinate to a first radio base station to a cell subordinate to a second radio base station accommodated in a gateway device, the radio base station being able to behave as the first radio base station, comprising:
a management unit configured so as to coordinate and manage subnet information and the IP address of the gateway device; and
a transmission unit configured so as to send a handover message including identification information on the cell subordinate to the second radio base station to the IP address of the gateway device corresponding to the subnet information of the identification information on the cell subordinate to the second radio base station in a case in which a measurement report including the identification information on the cell subordinate to the second radio base station has been received from the mobile station.
